# EUROPÄISCHE PATENTSCHRIFT

(11) **EP 1 587 644 B1**
(45) Veröffentlichungstag und Bekanntmachung des Hinweises auf die Patenterteilung: **25.10.2006**
(21) Anmeldenummer: 03788877.3
(22) Anmeldetag: 16.12.2003
(51) Int. Cl.: B23P 15/00, B21D 53/10, F16C 17/12, F16C 33/04

(54) **LAGERSCHALE UND VERFAHREN ZU IHRER HERSTELLUNG**
BEARING SHELL AND METHOD FOR THE PRODUCTION THEREOF
COUSSINET ET SON PROCEDE DE PRODUCTION

(30) Priorität: 17.12.2002 DE 10258829
(43) Veröffentlichungstag der Anmeldung: 26.10.2005
(73) Patentinhaber: Federal-Mogul Wiesbaden GmbH & Co.KG, 65201 Wiesbaden (DE)
(72) Erfinder: DAMOUR, Philippe, 60489 Frankfurt/Main (DE)
(86) Internationale Anmeldenummer: PCT/DE2003/004131
(87) Internationale Veröffentlichungsnummer: WO 2004/054752

(56) Entgegenhaltungen:
- DE-A- 19 733 285
- GB-A- 1 391 427
- US-A- 4 292 718
- US-A- 4 351 175
- US-B1- 6 227 709

## Beschreibung

Die Erfindung betrifft ein Verfahren zur Herstellung von Lagerschalen, bei dem Rohlinge aus einem Bandmaterial gefertigt werden, anschließend diese Rohlinge in eine Lagerschale umgeformt werden, die Innenfläche bearbeitet wird und abschließend diese Lagerschalen mit einer Gleitschicht versehen werden. Die Erfindung bezieht sich auch auf eine solche Lagerschale.

Das Bandmaterial besteht beispielsweise aus einem Trägermaterial, insbesondere aus Stahl, und wenigstens einer Lagermetallschicht. Von diesem Bandmaterial werden Materialstreifen abgetrennt, was in der Regel mittels eines Stanzvorgangs durchgeführt wird.

Lagerschalen müssen mit einer Markierung versehen werden, aus der die Spezifikation ersichtlich ist, damit beim Abnehmer eine Zuordnung zu dem jeweiligen Verbrennungsmotor möglich ist, wo die Lagerschale eingesetzt werden soll.

Hierzu gibt es verschiedene Möglichkeiten.

Einerseits kann eine entsprechende Markierung in Form eines Zahlen-Buchstaben-Codes, einer geometrischen Markierung oder dergleichen auf der Rückseite der Lagerschale aufgebracht werden. Dies kann mittels Prägen, eines Laserschreibverfahrens oder eines Tintendruckverfahrens geschehen. Damit ist jedoch die Lagerschale nach dem Einlegen im Gehäuse nicht mehr identifizierbar.

Es ist daher erforderlich, dass die Markierung an einer Stelle angebracht wird, die auch nach dem Einbau der Lagerschale noch erkennbar ist.

Hierfür eignet sich beispielsweise die Stirnfläche der Lagerschale oder auch deren Teilfläche. Dort besteht allerdings das Problem, dass die zur Verfügung stehende Fläche gering ist, so dass nur kleine Markierungen, z. B. in Form von Ausnehmungen angebracht werden können, die zwar von einem automatischen Bilderkennungssystem noch identifizierbar sind, die aber die Zuverlässigkeit der Gleitlagerschale im Betrieb beeinträchtigen können. Diese Ausnehmungen müssen gratfrei sein, was entsprechende Fertigungsprobleme mit sich bringt insbesondere bei der Bearbeitung von Stirn- bzw. Teilfläche sowie der Innenfläche.

Ein weiteres bekanntes Verfahren ist das Aufbringen von Markierungen auf der Gleitschicht selbst nach ihrer Beschichtung mittels z.B. eines Tintenstrahls. Dieses in der Serienproduktion eingesetzte Verfahren hat allerdings den Nachteil, dass ein gesonderter Verfahrensschritt notwendig ist, um diese Markierungen aufzubringen. Auch können sich solche Markierungen unter Umständen vorzeitig ablösen.

Aus der DE 197 33285 A1 ist ein Gleitlager bekannt, bei dem in der Gleitfläche als Markierung mindestens eine Vertiefung angebracht ist, deren Tiefe T < = der maximal zulässigen Rautiefe Rₜ ist. Als Ort der Markierung wird ein Bereich von 40 ° - 50 ° entfernt von der Teilfläche vorgeschlagen. Die Markierung besteht im wesentlichen aus einer Glättung der Oberflächenrauigkeit der Gleitschicht, zu deren Herstellung ein eigener Verfahrensschritt mit einem Markierungselement erforderlich ist, dessen Federkraft nicht größer als die Federkraft eines Messtasters für die Wanddicken-Messung sein darf. Dieses Verfahren ist äußerst empfindlich und für eine Serienproduktion nicht unbedingt geeignet.

Aufgabe der Erfindung ist es daher, ein kostengünstiges Verfahren zur dauerhaften Anbringung einer auch nach dem Einbau der Lagerschale noch sichtbaren Markierung bereitzustellen, wobei die Markierung die Eigenschaften der Lagerschale im Betrieb nicht nachteilig beeinflussen darf.

Diese Aufgabe wird mit einem Verfahren gemäß Anspruch 1 gelöst, bei dem vor dem Aufbringen der Gleitschicht innerhalb eines streifenförmigen Bereichs unterhalb der Teilfläche mindestens eine Markierungseinprägung in die Innenfläche des Rohlings oder der Lagerschale eingebracht wird, wobei Tiefe und Breitenerstreckung der Markierungseinprägung so groß gewählt werden müssen, dass die Kontur der Markierungseinprägung nach dem Aufbringen der Gleitschicht erhalten bleibt.

Die Kontur muss soweit erhalten bleiben, dass sie, insbesondere von einer Bilderkennungseinrichtung, noch erkennbar ist.

Eine Markierungseinprägung besitzt im Unterschied zu Einprägungen von Nocken, Ölnuten oder Ölreservoirs keine Eigenschaften, die das Gleitverhalten der Lagerschale betreffen. Da die Kontur z. B. nicht durch hydrodynamische Faktoren bestimmt wird, können die Markierungseinprägungen beliebig ausgeführt sein und z. B. aus abstrakten Symbolen, Buchstaben oder Ziffern bestehen. Die Größe solcher Markierungseinprägungen, d. h. deren Breitenerstreckung B' und deren Tiefe T' richtet sich lediglich nach der optischen Erkennbarkeit insbesondere durch Bilderkennungssysteme. Die Markierungseinprägungen müssen vorzugsweise eine Schattenbildung ermöglichen, so dass beispielsweise eine Graubildverarbeitung in einem Bildverarbeitungssystem möglich ist. Auch sollten die Konturen der Markierungseinprägungen so groß sein, dass die Struktur der Markierungseinprägung einer seits und die Strukturenne beneinander angeordneter Markierungseinprägungen andererseits aufgelöst werden können.

Eine Markierungseinprägung hat den weiteren Vorteil, dass Sie während des Transportes oder des Handlings beim Abnehmer nicht verschwinden kann. Wenn die Einprägung so groß und tief gewählt wird, dass sie nach dem Beschichtungsvorgang noch vorhanden ist, ist eine Identifizierung beim Abnehmer jederzeit möglich.

Damit eine Markierungseinprägung, die einen Eingriff in das Lager- und/oder Trägermaterial darstellt, keine nachteiligen Folgen für den Betrieb des Gleitlagers hat, ist es von Vorteil, wenn ein unbelasteter oder gering belasteter Bereich der Lagerschale hierfür vorgesehen ist. Es hat sich gezeigt, dass ein streifenförmiger Bereich unterhalb der Teilfläche auf der Innenseite der Lagerschale hierfür am besten geeignet ist, weil dieser Bereich vom Gegenläufer am wenigsten oder gar nicht belastet wird. Eine Beeinträchtigung der Lebensdauer der Lagerschale konnte im Vergleich zu Lagerschalen ohne derartige Markierungseinprägungen nicht festgestellt werden.

Ein solcher unbelasteter Bereich der Lagerschale ist der sogenannte Freilegungsbereich, der eine zur Teilfläche auslaufende, sich über die gesamte Breite der Lagerschale erstreckende Abschrägung gebildet wird, um Einbautoleranzen von Lagerdeckel und Lagergehäuse zu kompensieren. Dieser Freilegungsbereich, der sich von der Teilfläche ab über eine Länge L von ca. 3 - 10 mm erstreckt, nimmt nicht an der Lagerung des Gegenläufers teil, so dass die Markierungseinprägung die Eigenschaften der Lagerschale nicht beeinträchtigt.

Die Markierungseinprägung wird vorzugsweise vor der Freilegung in den Freilegungsbereich eingebracht.

Da die Markierungseinprägung vor dem Aufbringen der Gleitschicht, vorzugsweise vor dem Bearbeiten der Innenfläche der Lagerschale durchgeführt wird, müssen die Tiefe und die Breitenerstreckungen der Markierungseinprägung so groß gewählt werden, dass die Kontur der Markierungseinprägung nach dem Aufbringen der Gleitschicht, die beispielsweise galvanisch oder mittels eines Sputterverfahrens aufgebracht werden kann, erhalten bleibt. Dies bedeutet, dass beispielsweise ein "Dreieck" auch nach dem Aufbringen der Gleitschicht noch als "Dreieck", ein "A" noch als "A" und beispielsweise eine "5" noch als "5" identifizierbar ist.

Vorzugsweise wird die Markierungseinprägung in Kombination mit einem ohnehin durchzuführenden Bearbeitungsschritt eingebracht. Dadurch wird es möglich, die Markierungseinprägung in die Serienfertigung zu integrieren, wobei kein zusätzlicher Zeitaufwand für die Anbringung der Markierungseinprägung erforderlich ist. Damit werden auch keine zusätzlichen Kosten verursacht.

Vorzugsweise wird die Markierungseinprägung während des Ausstanzens des Rohlings eingebracht. Da dieser Vorgang ohnehin beispielsweise auch mit dem Ausstanzen von Ölbohrungen oder Nocken einhergeht, kann hierbei gleichzeitig auch die Markierungseinprägung eingebracht werden. Es ist hierfür lediglich ein zusätzliches Prägewerkzeug erforderlich.

Die Markierungseinprägung kann auch während des Umformens des Rohlings in eine Lagerschale eingebracht werden.

Vorzugsweise wird die Markierungseinprägung mit einer Tiefe T eingebracht, so dass nach der Innenbearbeitung die Tiefe T' >= 0,1 mm ist. Bei Einhaltung dieser Tiefe T' wird bei den üblichen Gleitschichtdicken von 5 - 30 µm sichergestellt, dass die Markierungseinprägung nicht mit dem Beschichtungsmaterial so vollständig ausgefüllt wird, das die Markierungseinprägung nach dem Beschichten nicht mehr erkennbar ist bzw. die Kontur der Markierungseinprägung sich derart verändert hat, dass der Informationsgehalt der Markierungseinprägung verloren gegangen ist.

Vorzugsweise wird die Markierungseinprägung mit einer Tiefe T eingebracht, so dass nach der Innenbearbeitung die Tiefe T' > dem Zweifachen der Dicke D, insbesondere der maximalen Dicke, der Gleitschicht ist.

Bezüglich der Breitenerstreckung B der Markierungseinprägung ist es vorteilhaft, dass diese Breitenerstreckung B so groß gewählt wird, dass nach der Innenbearbeitung die Breitenerstreckung B' > dem Zweifachen der Gleitschichtdicke, insbesondere der maximalen Gleitschichtdicke ist. Vorzugsweise ist B'≥ 0,1 mm.

Vorzugsweise werden runde oder N-eckige Konturen mit N ≥ 3 für die Markierungseinprägung gewählt, weil diese von Bildverarbeitungssystemen in der Regel am Besten erkannt werden und somit eine eindeutige Zuordnung mit großer Zuverlässigkeit gewährleistet werden kann.

Die Einprägung wird vorzugsweise in der Mitte des streifenförmigen Bereiches eingebracht. Es ist aber auch möglich, die Markierungseinprägung am Rand des streifenförmigen Bereiches vorzusehen.

Die erfindungsgemäße Lagerschale weist mindestens eine Markierungseinprägung in ihrer Innenfläche innerhalb eines streifenförmigen Bereichs unterhalb der Teilfläche auf. Die Markierungseinprägungen können unterhalb einer Teilfläche oder auch unterhalb beider Teilflächen vorgesehen sein. Die Lagerschale kann aus Vollmaterial bestehen oder einen Schichtaufbau aufweisen.

Beispielhafte Ausführungsformen der Erfindung werden nachfolgend anhand der Zeichnungen näher erläutert.
Es zeigen:
- Figur 1: eine Lagerschale mit einer Markierungseinprägung,
- Figur 2: einen Schnitt durch die Lagerschale gemäß der Figur 1 längs der Linie II-II,
- Figur 3: eine Lagerschale gemäß einer weiteren Ausführungsform und
- Figur 4: eine vergrößerte Teilschnitt-Darstellung gemäß der Linie IV-IV in der Figur 3.

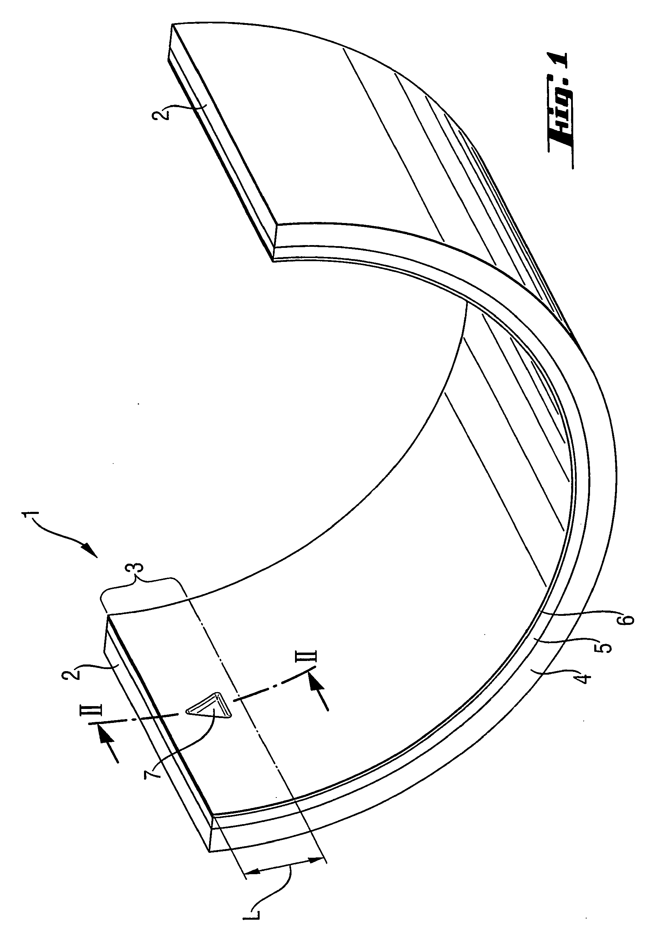

In der Figur 1 ist in perspektivischer Darstellung eine Gleitlagerschale 1 dargestellt, die ein Trägermaterial 4, ein Lagermaterial 5 und eine Gleitschicht 6 aufweist, die aufgesputtert oder galvanisch aufgebracht sein kann. Unterhalb der Teilfläche 2 ist ein streifenförmiger Bereich 3 eingezeichnet, der den unbelasteten Bereich der Lagerschale 1 im Betrieb kennzeichnet.

In diesem streifenförmigen Bereich 3 ist in der Mitte eine dreieckige Markierungseinprägung 7 zu sehen, die vor dem Aufbringen der Gleitschicht 6 in das Lagermaterial 5 eingeprägt wurde. Die Länge L dieses streifenförmigen Bereichs 3 liegt je nach Durchmesser der Lagerschale im Bereich von 3 - 10 mm.

Markierungseinprägungen können auch beidseitig, d. h. unterhalb beider Teilflächen vorgesehen sein. Auch ist der Schichtaufbau mit den Schichten 4, 5 und 6 beispielhaft. Es ist auch denkbar, dass noch Zwischenschichten beispielsweise zwischen dem Trägermaterial 4 und dem Lagermaterial 5 vorgesehen sind. Auch kann die Lagerschale aus nur einer Materiallage bestehen, die mit einer Gleitschicht beschichtet ist.

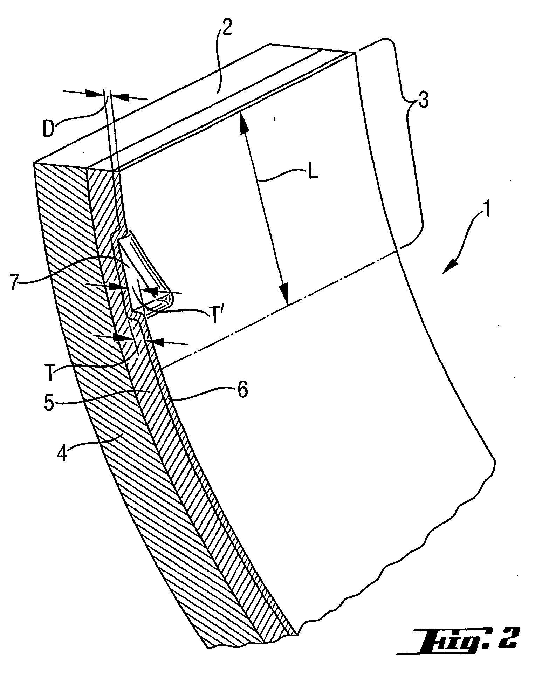

Wie aus der Figur 2 zu entnehmen ist, in der ein Schnitt längs der Linie A-A der Figur 1 zu sehen ist, ist die Tiefe T der Markierungseinprägung 7 im Lagermaterial 5 in etwa doppelt so groß wie die Dicke D der Gleitschicht 6, so dass nach dem Beschichtungsvorgang eine Tiefe T' erhalten bleibt, bei der die Markierungseinprägung 7 eindeutig erkennbar ist. Typische Gleitschichtdicken sind 5 - 30 µm.

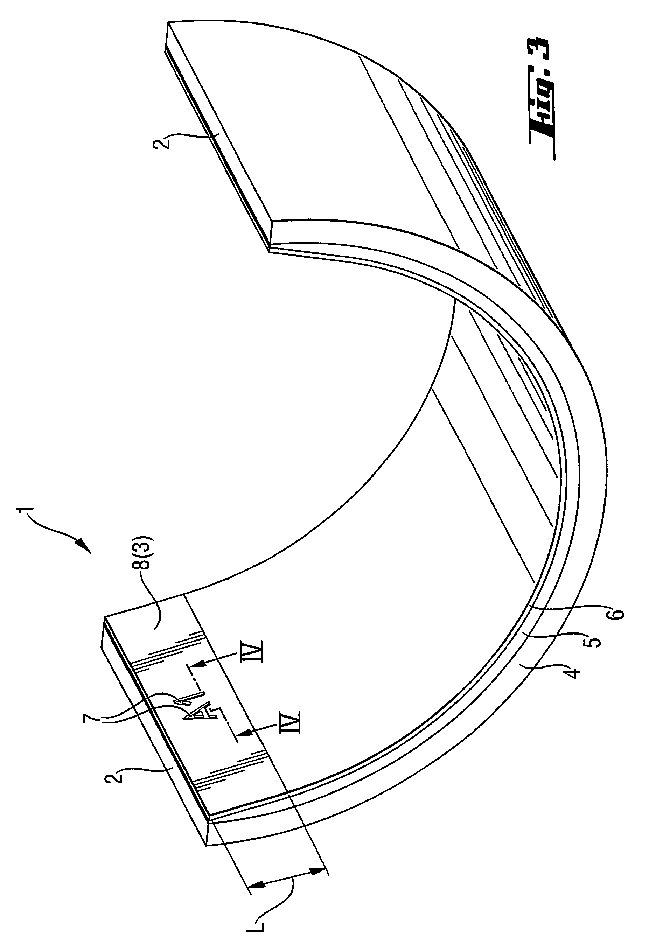

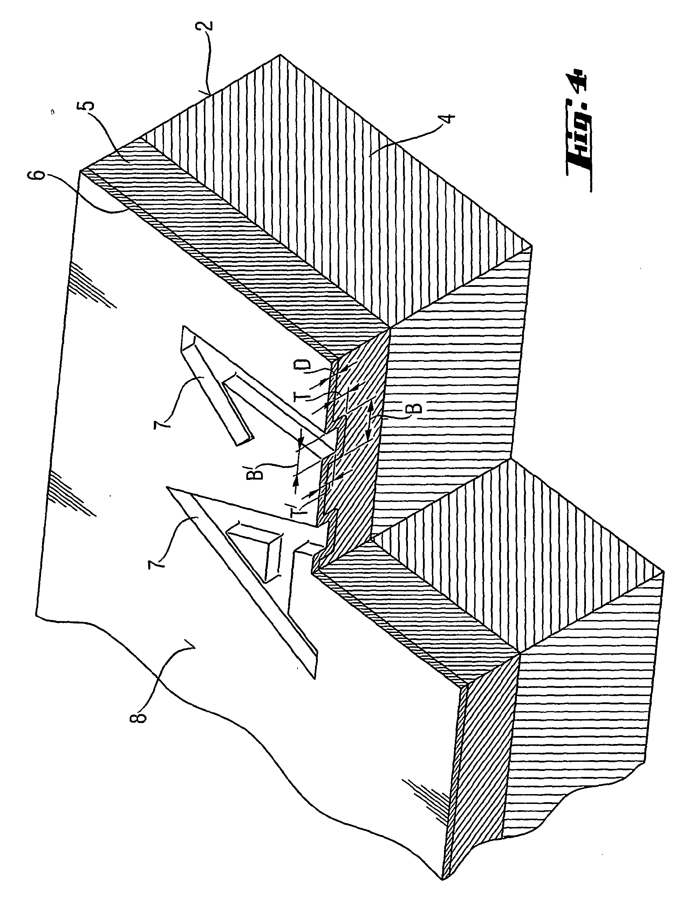

In der Figur 3 ist eine weitere Ausführungsform einer Lagerschale 1 dargestellt, die unterhalb der Teilfläche 2 einen sogenannten Freilegungsbereich 8 mit der Länge L aufweist. Es handelt sich um eine zur Teilfläche 2 auslaufende Abschrägung, die in der hier gezeigten Darstellung mit dem streifenförmigen Bereich 3 identisch ist. Es sind zwei Markierungseinprägungen 7 in Form eines "A" und einer "1" vorgesehen, die in der Figur 4 zur Erläuterung der Breitenerstreckung B, B' vergrößert dargestellt sind.

Figur 4 zeigt einen Ausschnitt gem. der Linie IV-IV in Figur 3. Hier ist erkennbar, dass die mittlere Breitenerstreckung B der in das Lagermaterial 5 eingebrachten Markierungseinprägung 7 mindestens der zweifachen maximalen Dicke der Gleitschicht 6 entsprechen muß, um nach erfolgter Beschichtung mit der Gleitschicht 6 eine sichtbare Einprägungsbreite B' zu realisieren. Für die Einprägtiefe T resp. die Tiefe T' der Markierungseinprägung 7 gelten grundsätzlich die im Zusammenhang mit dem ersten Ausführungsbeispiel beschriebenen Größenordnungen.

### Bezugszeichen

- 1: Lagerschale
- 2: Teilfläche
- 3: streifenförmiger Bereich
- 4: Trägermaterial
- 5: Lagermaterial
- 6: Gleitschicht
- 7: Markierungseinprägung
- 8: Freilegungsbereich
- 9: Länge von 3
- T: Tiefe vor Innenbearbeitung
- T': Tiefe nach Innenbearbeitung
- B: Breitenerstreckung vor Innenbearbeitung
- B': Breitenerstreckung nach Innenbearbeitung

## Patentansprüche

1. Verfahren zur Herstellung von Lagerschalen, bei dem Rohlinge aus einem Bandmaterial gefertigt werden, anschließend diese Rohlinge in eine Lagerschale umgeformt werden und abschließend diese Lagerschalen mit einer Gleitschicht versehen werden, **dadurch gekennzeichnet,**
**dass** vor dem Aufbringen der Gleitschicht innerhalb eines streifenförmigen Bereichs (3, 8) unterhalb der Teilfläche (2) mindestens eine Markierungseinprägung (7) in die Innenfläche des Rohlings oder der Lagerschale eingebracht wird, wobei die Tiefe und die Breitenerstreckung der Markierungseinprägung (7) so groß gewählt werden, dass die Kontur der Markierungseinprägung (7) nach dem Aufbringen der Gleitschicht (6) erhalten bleibt.

2. Verfahren nach Anspruch 1, **dadurch gekennzeichnet, dass** die Markierungseinprägung (7) vor dem Bearbeiten der Innenfläche eingebracht wird.

3. Verfahren nach Anspruch 1 oder 2, **dadurch gekennzeichnet, dass** die Markierungseinprägung (7) in Kombination mit einem ohnehin durchzuführenden Bearbeitungsschritt eingebracht wird.

4. Verfahren nach einem der Ansprüche 1 bis 3, **dadurch gekennzeichnet, dass** die Markierungseinprägung (7) während des Ausstanzens des Rohlings eingebracht wird.

5. Verfahren nach einem der Ansprüche 1 bis 3, **dadurch gekennzeichnet, dass** die Markierungseinprägung (7) während des Umformens eingebracht wird.

6. Verfahren nach einem der Ansprüche 1 bis 5, **dadurch gekennzeichnet, dass** die Markierungseinprägung (7) in einem später herzustellenden Freilegungsbereich der Lagerschale eingebracht wird.

7. Verfahren nach einem der Ansprüche 1 bis 6, **dadurch gekennzeichnet, dass** die Markierungseinprägung (7) mit einer Tiefe T eingebracht wird, so dass nach der Innenbearbeitung die Tiefe T' > = 0,1 mm ist.

8. Verfahren nach einem der Ansprüche 1 bis 7, **dadurch gekennzeichnet, dass** die Markierungseinprägung (7) mit einer Tiefe T eingebracht wird, so dass nach der Innenbearbeitung die Tiefe T' > dem Zweifachen der Dicke D der Gleitschicht ist.

9. Verfahren nach einem der Ansprüche 1 bis 8, **dadurch gekennzeichnet, dass** eine Markierungseinprägung (7) mit einer runden oder N-eckigen Kontur mit N > = 3 eingebracht wird.

10. Verfahren nach einem der Ansprüche 1 bis 9, **dadurch gekennzeichnet, dass** die Markierungseinprägung (7) mit einer Breitenerstreckung B eingebracht wird, so dass nach der Innenbearbeitung die Breitenerstreckung B' > dem Zweifachen der Dicke der Gleitschicht ist.

11. Verfahren nach einem der Ansprüche 1 bis 10, **dadurch gekennzeichnet, dass** die Markierungsprägung (7) mit einer Breitenerstreckung B eingebracht wird, so dass nach der Innenbearbeitung die Breitenerstreckung B' ≥ 0,1 mm ist.

12. Verfahren nach einem der Ansprüche 1 bis 10, **dadurch gekennzeichnet, dass** die Einprägung (7) in der Mitte des streifenförmigen Bereichs eingebracht wird.

13. Verfahren nach einem der Ansprüche 1 bis 12, **dadurch gekennzeichnet, dass** die Einprägung (7) am Rand des streifenförmigen Bereiches eingebracht wird.

14. Lagerschale mit mindestens einer Markierungseinprägung (7) in ihrer Innenfläche innerhalb eines streifenförmigen Bereichs (3,8) unterhalb der Teilfläche (2).

## Claims

1. Method for manufacturing bearing shells, wherein the blanks are produced from a strip material, and thereafter said blanks are reshaped into a bearing shell and subsequently said bearing shells are provided with a lubricating layer, **characterised in that** before application of the lubricating layer, at least one impressed marking (7) is made in the inner surface of the blank or the bearing shell within a strip-shaped region (3, 8) beneath the joint face (2), whereby the depth and width of said impressed marking (7) are selected such that the contour of the impressed marking remains after application of the lubricating layer (6).

2. Method according to claim 1, **characterised in that** the impressed marking (7) is made before the machining of the inner surface.

3. Method according to claim 1 or 2, **characterised in that** the impressed marking (7) is made in combination with a machining step that already needed to be carried out.

4. Method according to one of the claims 1 to 3, **characterised in that** the impressed marking (7) is made during stamping out of the blank.

5. Method according to one of the claims 1 to 3, **characterised in that** the impressed marking (7) is made during the reshaping.

6. Method according to one of the claims 1 to 5, **characterised in that** the impressed marking (7) is made in an exposed region of the bearing shell, which region is to be produced later.

7. Method according to one of the claims 1 to 6, **characterised in that** the impressed marking (7) is made with a depth T such that, following the internal machining, the depth T' ≥ 0.1 mm.

8. Method according to one of the claims 1 to 7, **characterised in that** the impressed marking (7) is made with a depth T such that, following the internal machining, the depth T' > twice the thickness D of the lubricating layer.

9. Method according to one of the claims 1 to 8, **characterised in that** an impressed marking (7) is made with a round or N-sided contour, where N ≥ 3.

10. Method according to one of the claims 1 to 9, **characterised in that** an impressed marking (7) is made with a width B such that, after internal machining, the width B' > twice the thickness of the lubricating layer.

11. Method according to one of the claims 1 to 10, **characterised in that** the impressed marking (7) is made with a width B such that, following the internal machining, the width B' ≥ 0.1 mm.

12. Method according to one of the claims 1 to 10, **characterised in that** the impressed marking (7) is made in the centre of the strip-shaped region.

13. Method according to one of the claims 1 to 12, **characterised in that** the impressed marking (7) is made at the edge of the strip-shaped region.

14. Bearing shell with at least one impressed marking (7) in its inner surface within a strip-shaped region (3, 8) beneath the joint face (2).

## Revendications

1. Procédé de fabrication de coussinets, dans lequel des ébauches sont produites à partir d'un matériau en bandes, ces ébauches sont ensuite amenées à la forme d'un coussinet et, au stade définitif, ces coussinets sont munis d'une couche de glissement, **caractérisé par le fait**
**que**, préalablement au dépôt de la couche de glissement, au moins un poinçon de repérage (7) est empreint dans la face interne de l'ébauche ou du coussinet, à l'intérieur d'une zone (3, 8) en forme de ruban au-dessous de la surface de séparation (2), la profondeur et l'étendue en largeur du poinçon de repérage (7) étant choisies d'un dimensionnement tel que le profil dudit poinçon de repérage (7) subsiste après le dépôt de la couche de glissement (6).

2. Procédé selon la revendication 1, **caractérisé par le fait que** le poinçon de repérage (7) est empreint préalablement à l'usinage de la face interne.

3. Procédé selon la revendication 1 ou 2, **caractérisé par le fait que** le poinçon de repérage (7) est empreint en combinaison avec une étape d'usinage dont l'exécution est programmée dans tous les cas.

4. Procédé selon l'une des revendications 1 à 3, **caractérisé par le fait que** le poinçon de repérage (7) est empreint au stade du matriçage de l'ébauche.

5. Procédé selon l'une des revendications 1 à 3, **caractérisé par le fait que** le poinçon de repérage (7) est empreint au stade de la mise en forme.

6. Procédé selon l'une des revendications 1 à 5, **caractérisé par le fait que** le poinçon de repérage (7) est empreint dans une zone dénudée du coussinet devant être produite à un stade ultérieur.

7. Procédé selon l'une des revendications 1 à 6, **caractérisé par le fait que** le poinçon de repérage (7) est empreint avec une profondeur T, de telle sorte que la profondeur T' ≥ 0,1 mm après l'usinage intérieur.

8. Procédé selon l'une des revendications 1 à 7, **caractérisé par le fait que** le poinçon de repérage (7) est empreint avec une profondeur T, de telle sorte que la profondeur T' > le double de l'épaisseur D de la couche de glissement après l'usinage intérieur.

9. Procédé selon l'une des revendications 1 à 8, **caractérisé par le fait que** 1e poinçon de repérage (7) est empreint avec un profil circulaire ou un profil à N coins, sachant que N ≥ 3.

10. Procédé selon l'une des revendications 1 à 9, **caractérisé par le fait que** le poinçon de repérage (7) est empreint avec une étendue en largeur B, de telle sorte que l'étendue en largeur B' > le double de l'épaisseur de la couche de glissement après l'usinage intérieur.

11. Procédé selon l'une des revendications 1 à 10, **caractérisé par le fait que** le poinçon de repérage (7) est empreint avec une étendue en largeur B, de telle sorte que l'étendue en largeur B' ≥ 0,1 mm après l'usinage intérieur.

12. Procédé selon l'une des revendications 1 à 10, **caractérisé par le fait que** le poinçon (7) est empreint au centre de la zone en forme de ruban.

13. Procédé selon l'une des revendications 1 à 12, **caractérisé par le fait que** le poinçon (7) est empreint sur le bord de la zone en forme de ruban.

14. Coussinet comportant au moins un poinçon de repérage (7) dans sa surface interne à l'intérieur d'une zone (3, 8) en forme de ruban, au-dessous de la surface de séparation (2).
